# EUROPEAN PATENT APPLICATION

(11) **EP 1 104 899 A2**
(43) Date of publication of application: **06.06.2001**
(21) Application number: 00308521.4
(22) Date of filing: 28.09.2000
(51) Int. Cl.: G06F 9/46

(54) **Data processing apparatus and method of controlling the same**

(30) Priority: 05.11.1999 JP 31542399
(71) Applicant: FUJITSU LIMITED, Kawasaki-shi, Kanagawa 211-8588 (JP)
(72) Inventor: Miyake, Hideo, Kawasaki-shi, Kanagawa 211-8588 (JP); Suga, Atsuhiro, Kawasaki-shi, Kanagawa 211-8588 (JP); Nakamura, Yasuki, Kawasaki-shi, Kanagawa 211-8588 (JP); Takebe, Yoshimasa, Kawasaki-shi, Kanagawa 211-8588 (JP)
(74) Representative: Stebbing, Timothy Charles

(57) **Abstract**

A data processing apparatus that can perform high-speed interrupt processing, and a method of controlling such a data processing apparatus are provided. This data processing apparatus includes: an execution unit that executes an instruction read out from a memory; a general register connected to the execution unit; a shadow register also connected to the execution unit; and selectors that allocate to the shadow register a part or the entire part of an address already allocated to the general register when an interrupt is executed in accordance with the instruction.

## Description

### BACKGROUND OF THE INVENTION

### 1. Field of the Invention

The present invention generally relates to data processing apparatuses and methods of controlling such apparatuses, and, more particularly, to a data processing apparatus that can perform data interrupt processing and a method of controlling such a data processing apparatus.

### 2. Description of the Related Art

In a computer system, it is necessary to prepare for an unexpected situation that is not or cannot be specified in a program. Also, an operation that does not derive from the original functions of hardware or a program (such as an error or exception) needs to be detected and then corrected. It is also necessary to provide a means to communicate with a hardware mechanism and basic software, particularly with the operating system (OS). Furthermore, the use of shared hardware resources such as a processor and memory needs to be scheduled to arbitrate requests to use the shared hardware resources. Also, resources that operate asynchronously with each other, such as processors connected to each other in a network, need to be synchronized for communication.

In response to those demands, a computer system is designed to execute an interrupt so as to forcibly and dynamically change the original instruction execution order specified as a program.

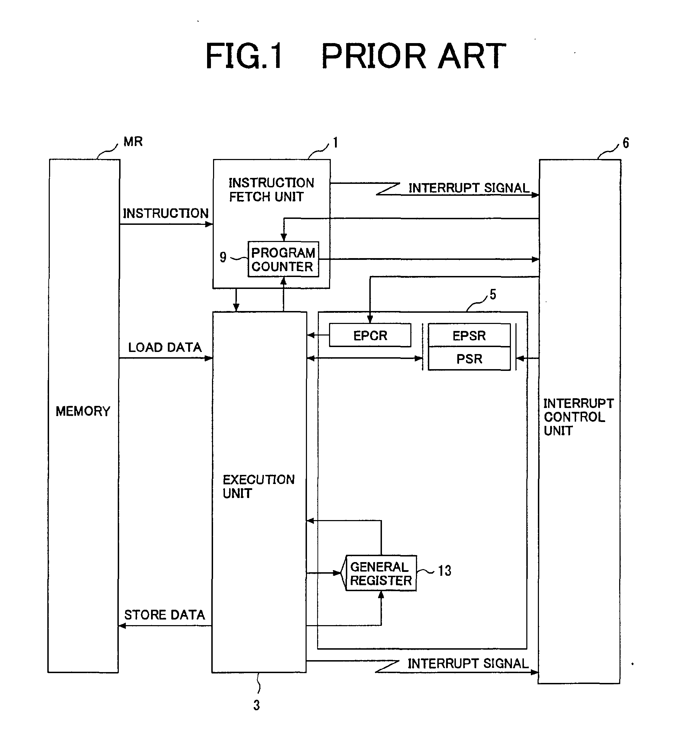

FIG. 1 shows the structure of a conventional processor. As shown in FIG. 1, this processor comprises an instruction fetch unit 1, an execution unit 3, a register control unit 5, an interrupt control unit 6, and a memory MR. The instruction fetch unit 1 comprises a program counter 9, and the register control unit 5 comprises a general register 13 and registers EPCR, EPSR, and PSR. The instruction fetch unit 1 is connected to the memory MR and the interrupt control unit 6. The execution unit 3 is connected to the instruction fetch unit 1, the memory MR, and the register control unit 5. The register control unit 5 is connected to the interrupt control unit 6.

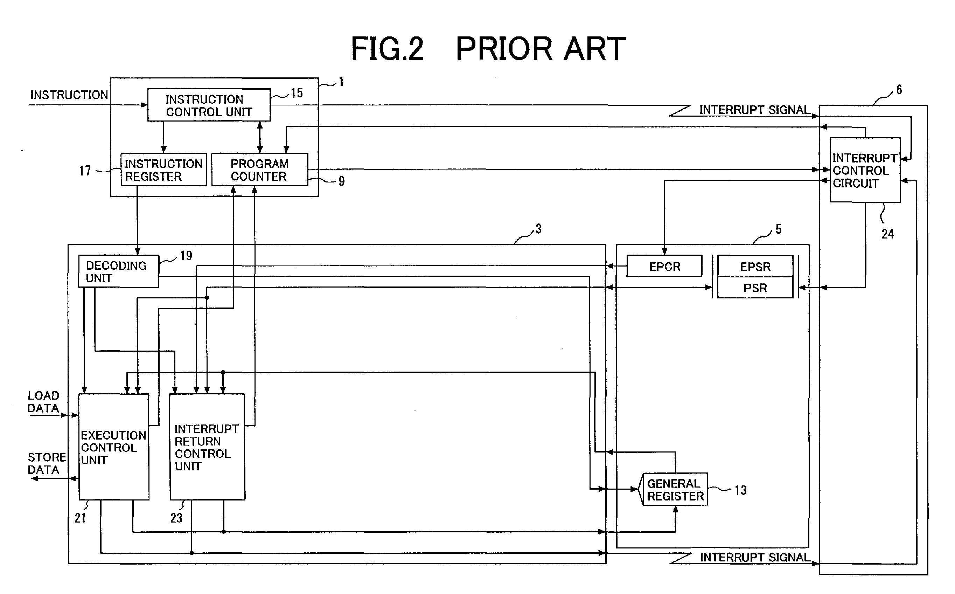

FIG. 2 is a detailed block diagram of the structure of the processor shown in FIG. 1. As shown in FIG. 2, the instruction fetch unit 1 comprises an instruction control unit 15, an instruction register 17, and the program counter 9. The execution unit 3 comprises a decoding unit 19, an execution control unit 21, and an interrupt return control unit 23. The register control unit 5 comprises the registers EPCR, EPSR, and PSR, and the general register 13. The interrupt control unit 6 comprises an interrupt control circuit 24.

The instruction control unit 15 is connected to the memory MR. The program counter 9 and the instruction register 17 are connected to the instruction control unit 15. The decoding unit 19 is connected to the instruction register 17. The execution unit 21 is connected to the memory MR. The execution control unit 21 and the interrupt return control unit 23 are connected to the decoding unit 19 and the general register 13. The general register 13 is connected to the decoding unit 19. The registers EPCR, EPSR, and PSR are connected to and located between the interrupt return control unit 23 and the interrupt control circuit 24. The interrupt control circuit 24 is connected to the program counter 9, the instruction control unit 15, the execution control unit 21, and the interrupt return control unit 23.

The conventional processor having the above structure operates as follows. Based on the address of an instruction word to be read out, which address is supplied from the program counter 9, the instruction control unit 15 reads out the instruction word from the memory MR and supplies it to the decoding unit 19. If an interrupt is detected during the instruction readout, the instruction control unit 15 supplies an interrupt signal to the interrupt control circuit 24 so as to notify the interrupt control circuit 24 of the detected interrupt. If a branch destination address is supplied during the interrupt processing, the program counter 9 holds the branch destination address. If no branch destination address is supplied, the program counter 9 is incremented so as to indicate the next instruction. Accordingly, based on an branch destination address supplied from the program counter 9, the instruction control unit 15 reads out the instruction word corresponding to the supplied branch destination address from the memory MR during the interrupt processing.

The execution unit 3 executes an instruction supplied to the decoding unit 19. For instance, if an arithmetic instruction is supplied, the execution control unit 21 performs an operation based on a value read out from the general register 13, and writes the result in the general register 13. If a branch is established when a branch instruction is supplied, the execution control unit 21 supplies the branch destination address to the program counter 9. If a load instruction is supplied, the execution control unit 21 determines an effective (memory) address based on a value read out from the general register 13, and writes the data read out from the area in the memory MR corresponding to the determined effective address into the general register 13. If a store instruction is supplied, the execution control unit 21 determines an effective (memory) address based on a value read out from the general register 13, and writes the data read out of the general register 13 into the area in the memory MR corresponding to the determined effective address. If an interrupt return instruction is supplied, the interrupt return control unit 23 returns to the state in which the value of the register EPSR has yet to be written in the register PSR, and also reads out the data stored in the register EPCR and supplies it as an interrupt destination address to the program counter 9. If a branch is detected while an instruction is being executed, the execution control unit 21 and the interrupt return control unit 23 supply an interrupt signal to the interrupt control circuit 24.

The register EPCR holds an address for indicating a return destination from an interrupt, and is set when an interrupt occurs. The register PSR holds a status value of the processor. The register EPSR holds a pre-interrupt status value of the processor, and is set when an interrupt occurs.

In accordance with an interrupt signal supplied from the instruction fetch unit 1 or the execution unit 3, the interrupt control circuit 24 supplies an address for indicating a return destination from an interrupt to the register EPCR, and also supplies a pre-status value of the processor to the register EPSR. The interrupt control circuit 24 supplies the branch destination address corresponding to an interrupt that has occurred to the instruction fetch unit 1.

The processor described above may be in a user state in which regular data processing is performed upon activation of software on an OS, or in a supervisor state in which the OS itself can be operated. When an interrupt occurs, the processor switches from the user state to the supervisor state. On the other hand, when a return is made from the interrupt, the processor returns to the user state.

As described above, when an interrupt occurs, the control flow branches into another process (an interrupt process) that is not included in the original instruction execution order specified as a program, and an interrupt processing program (also known as an interrupt handler) is executed. In accordance with interrupt return procedures specified at the end of the interrupt processing program, the operation returns to the original program execution order.

In the execution of the interrupt processing program in a series of operations, resources such as registers in the processor are used, and the values held in those resources are destroyed. In order to return to the original execution order specified in the program, the resources that might be destroyed should be saved beforehand, and then restored. Those resources are called context, and saving and restoring the context is called "context switching".

By reducing the execution time of the interrupt processing program, the interrupt processing itself can be performed at higher speed, and the performance of the computer system can be enhanced accordingly.

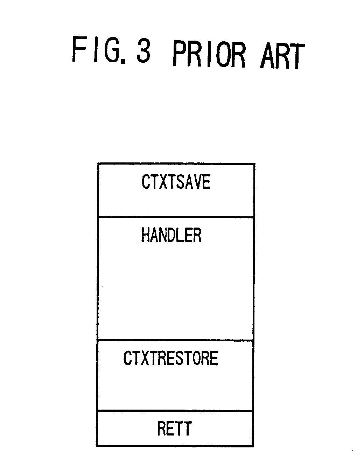

FIG. 3 shows the structure of a conventional interrupt processing program. As shown in FIG. 3, the interrupt processing program is made up of a saving part CTXTSAVE for saving a context in the original order specified as the program for executing an instruction into a memory, a handling part HANDLER for performing an operation corresponding to an interrupt that has occurred, a restoring part CTXTRESTORE for restoring the context in the original order specified as the program for instruction execution, and a return part RETT for returning from the interrupt in compliance with an interrupt return instruction. The saving part CTXTSAVE, the handling part HANDLER, the restoring part CTXTRESTORE, and the return part RETT are executed in that order.

In the execution of the saving part CTXTSAVE and the restoring part CTXTRESTORE, the context is saved into the memory, and load and store operations in the memory are performed accordingly. In a case where a means to communicate with the hardware mechanism and basic software (particularly, the OS), such as system call or supervisor call (SVC), is realized in the handling part HANDLER, the context is saved into the memory. Accordingly, load and store operations need to be performed in the memory.

However, load and store operations normally take a relatively long time, which will present a problem that the time required for executing an interrupt processing program is too long for desired efficient interrupt processing.

### SUMMARY OF THE INVENTION

A general object of the present invention is to provide a data processing apparatus in which the above disadvantages are eliminated.

A more specific object of the present invention is to provide a data processing apparatus that can perform high-speed interrupt processing and a method of controlling such a data processing apparatus.

The above objects of the present invention are achieved by a data processing apparatus including: an execution unit that executes an instruction read out from a memory; a general register that is connected to the execution unit; a storage unit that is connected to the execution unit; and an address switching unit that allocates to the storage unit a part or the entire part of an address already allocated to the general register, when an interrupt is executed in accordance with the instruction. With this data processing apparatus, the number of load store operations for the memory prior to the execution of the interrupt can be reduced. This data processing apparatus may further include a status value set unit in which a value that varies depending on whether or not the interrupt is being executed in accordance with the instruction is set. In this data processing apparatus, the address switching unit may allocate to the storage unit a part or the entire part of the address already allocated to the general register, in accordance with the value set in the status value set unit. With this data processing apparatus, data processing involving multiple-interrupt processing can be performed.

The above data processing apparatus may further comprise a data saving unit that saves data stored in the general register into the memory at the time of executing the interrupt, in accordance with a save destination address stored in the storage unit.

The above objects of the present invention are also achieved by a method of controlling a data processing apparatus that includes an execution unit, and a general register and a storage unit both connected to the execution unit. This method includes the steps of: executing an instruction read out from a memory by the execution unit; and allocating to the storage unit a part or the entire part of an address already allocated to the general register, when an interrupt is executed in accordance with the instruction read out from the memory. According to this method, data stored in the general register can be saved in the memory when the interrupt is executed, in accordance with a save destination address stored in the storage unit.

The above and other objects and features of the present invention will become more apparent from the following description taken in conjunction with the accompanying drawings.

### BRIEF DESCRIPTION OF THE DRAWINGS

FIG. 1 is a block diagram showing the structure of a conventional processor;
FIG. 2 is a detailed block diagram showing the structure of the processor of FIG. 1;
FIG. 3 shows the structure of a conventional interrupt processing program;
FIGS. 4A to 4C illustrate interrupt processing performed by the conventional processor;
FIGS. 5A and 5B illustrate interrupt processing by a processor of the present invention;
FIG. 6 is a block diagram showing the structure of a first embodiment of the processor of the present invention;
FIG. 7 is a detailed block diagram showing the structure of the processor of FIG. 6;
FIG. 8 shows the format of a read instruction in the present invention;
FIG. 9 shows the format of a write instruction in the present invention;
FIG. 10 is a block diagram showing the structure of a second embodiment of the processor of the present invention;
FIG. 11 is a detailed block diagram showing the structure of the processor of FIG. 10;
FIG. 12 shows the format of an effective flag write instruction of the second embodiment of the present invention;
FIG. 13 is a block diagram showing the structure of a third embodiment of the processor of the present invention;
FIG. 14 is a first detailed block diagram showing the structure of the processor of FIG. 13;
FIG. 15 is a second detailed block diagram showing the structure of the processor of FIG. 13;
FIG. 16 shows a first structure of an interrupt processing program in the third embodiment of the present invention;
FIG. 17 shows a second structure of the interrupt processing program in the third embodiment of the present invention;
FIG. 18 is a block diagram showing the structure of a fourth embodiment of the processor of the present invention;
FIG. 19 is a first detailed block diagram showing the structure of the processor of FIG. 18; and
FIG. 20 is a second detailed block diagram showing the structure of the processor of FIG. 18.

### DESCRIPTION OF THE PREFERRED EMBODIMENTS

The following is a description of embodiments of the present invention, with reference to the accompanying drawings. In the drawings, like reference numerals denote like parts and components.

In the embodiments of the present invention, a general register is accompanied by a shadow register. Depending on each operation to be performed by the processor, either the general register or the shadow register is selected. When data is read from or written in the shadow register, a circuit performs read and write operations on the general register corresponding to the shadow register.

The basic procedures of interrupt processing performed by the processor in accordance with the present invention, in comparison with conventional interrupt processing, will be described below.

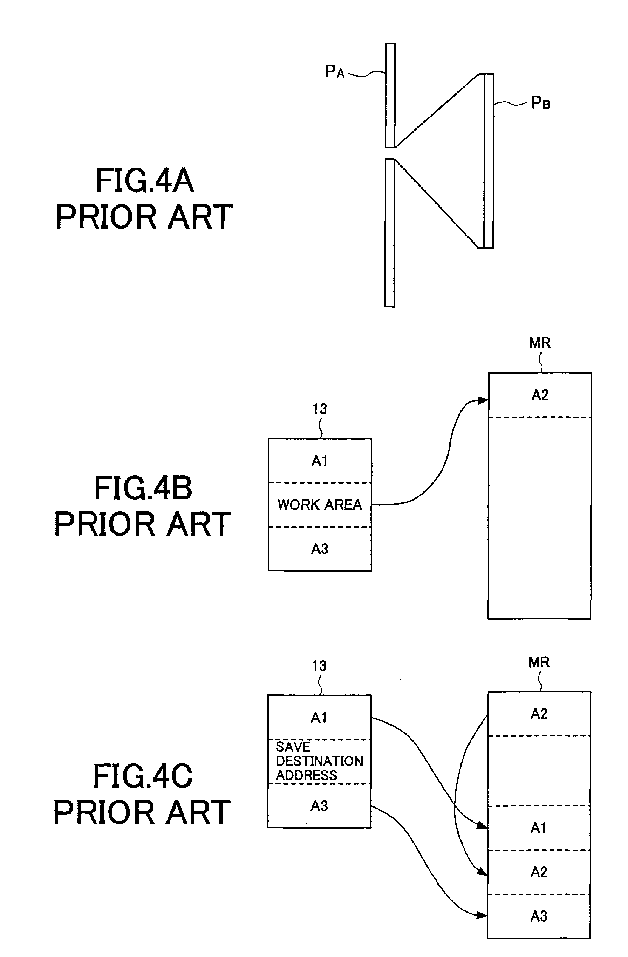

FIGS. 4A to 4C illustrate interrupt processing by a conventional processor. FIG. 4A shows a case where an interrupt occurs in the middle of the procedure to execute a main instruction specified in a program P_{A}, and interrupt processing is performed by a program P_{B}. In this case, when the interrupt occurs, the entire area of a general register 13 is being used for the execution of the program P_{A}. Because of this, even an address that specifies the data save destination held in the general register 13 cannot be written in the general register 13. If such an address is written at this point, the original data will be destroyed.

To avoid this, it is necessary to secure a work area in the general register 13. For instance, data held in an area A2 in the general register 13 is loaded and stored in the memory MR, thereby creating a work area in the general register 13, as shown in FIG. 4B. A save destination address for specifying a save destination is then stored in the work area created in the general register 13. In accordance with the save destination address, data held in areas A1 and A3 in the general register 13 is loaded and stored in the memory MR, and the data of the area A2 temporarily placed in the memory MR is moved to an appropriate position, as shown in FIG. 4C.

As described above, in the interrupt processing by the conventional processor, when an interrupt occurs, the data stored in the areas A1 to A3 in the general register 13 are saved into the memory MR in the same order, so that the general register 13 can be used for the interrupt processing by the program P_{B}.

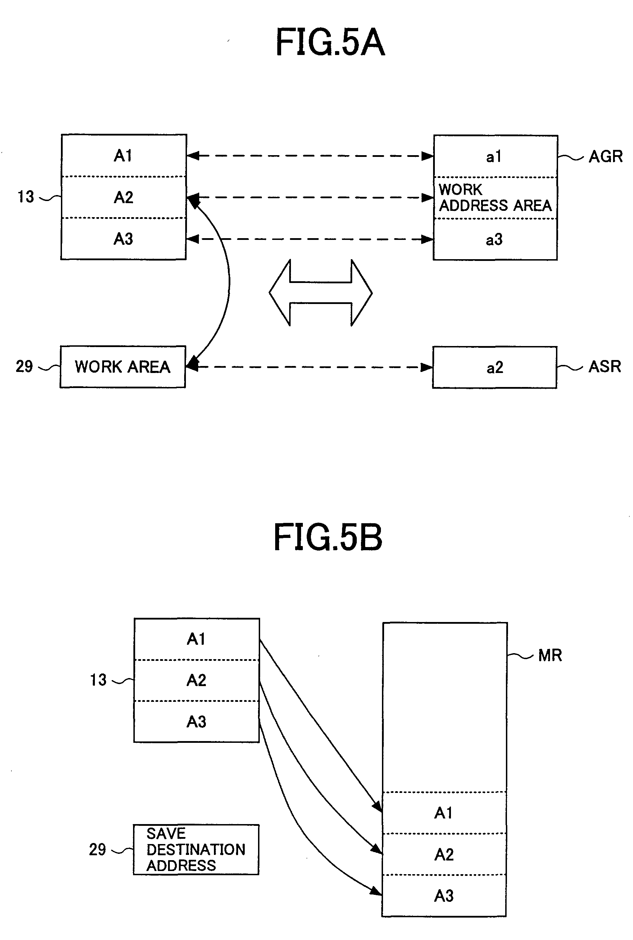

In comparison with the above conventional interrupt processing, procedures of interrupt processing in accordance with the present invention will be described below. FIG. 5A shows a case where a shadow register 29, as well as the general register 13, is employed for securing a work area. For instance, addresses "a1" and "a3" corresponding to data stored in the areas A1 and A3 are stored in address areas AGR in the general register 13. Also, the address area corresponding to the area A2 serves as a work address area, and the shadow register 29 can be accessed by accessing the work address area. Here, the address "a2" corresponding to the data stored in the area A2 in the general register 13 at the time of interrupt occurrence is allocated to an address area ASR corresponding to the shadow register 29.

As shown in FIG. 5B, a save destination address is stored in the shadow register 29 corresponding to the work address area. Based on the save destination address, the data stored in the areas A1 to A3 in the general register 13 at the time of interrupt occurrence is then saved into the memory MR in that order by virtue of an execution control unit 21 mentioned later.

As described so far, in accordance with the interrupt processing of the present invention, the address allocation (i.e., address switching) is performed as shown in FIG. 5A, thereby eliminating the need to perform a load store operation shown in FIG. 4B. Thus, interrupt processing can be performed at higher speed than in the prior art.

### [Embodiment 1]

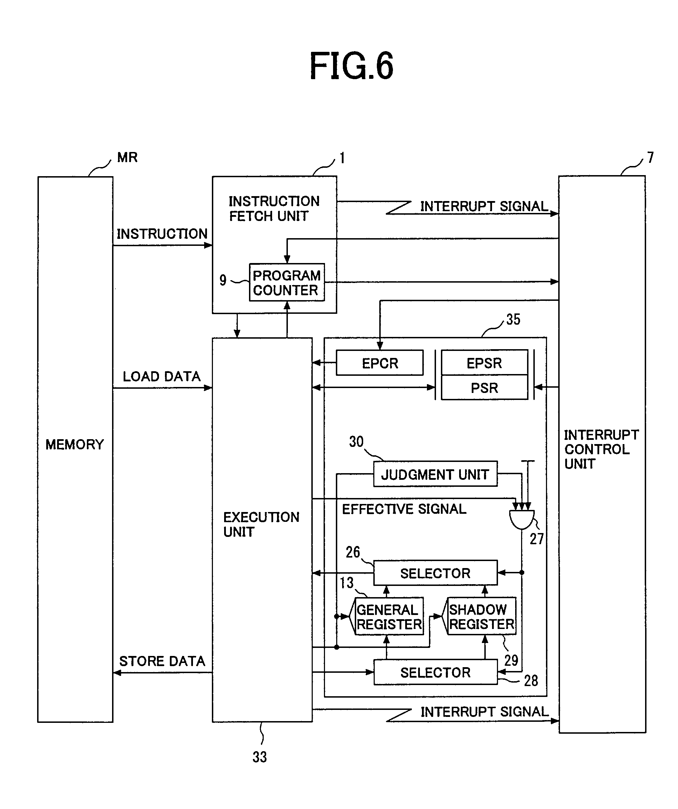

FIG. 6 shows the structure of a processor in accordance with a first embodiment of the present invention. As shown in FIG. 6, this processor comprises an instruction fetch unit 1, an execution unit 33, a register control unit 35, an interrupt control unit 7, and a memory MR. The instruction fetch unit 1 includes a program counter 9. The register control unit 35 comprises a general register 13, registers EPCR, EPSR, and PSR, a shadow register 29, an AND circuit 27, selectors 26 and 28, and a judgment unit 30. The instruction fetch unit 1 is connected to the memory MR and the interrupt control unit 7. The execution unit 33 is connected to the instruction fetch unit 1, the memory MR, and the interrupt control unit 7. The register control unit 35 is connected to the interrupt control unit 7.

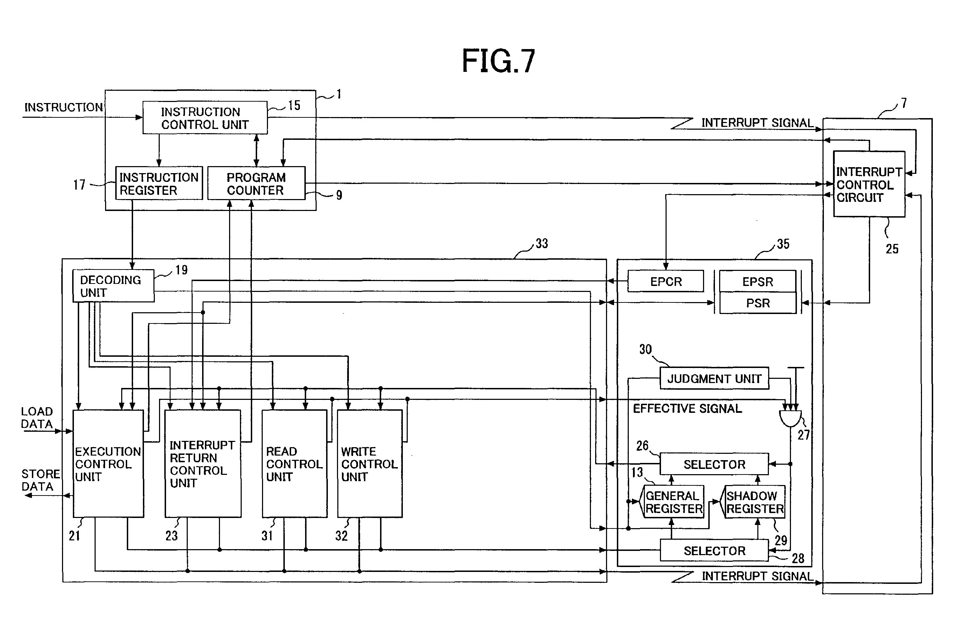

FIG. 7 is a detailed diagram circuit of the structure of the processor shown in FIG. 6. As shown in FIG. 7, the instruction fetch unit 1 comprises an instruction control unit 15, an instruction register 17, and the program counter 9. The execution unit 33 comprises a decoding unit 19, an execution control unit 21, an interrupt return control unit 23, a read control unit 31, and a write control unit 32. The register control unit 35 comprises the registers EPCR, EPSR, and PSR, the general register 13, the shadow register 29, the AND circuit 27, the selectors 26 and 28, and the judgment unit 30. The interrupt control unit 7 comprises an interrupt control circuit 25.

The instruction fetch unit 15 is connected to the memory MR. The program counter 9 and the instruction register 17 are connected to the instruction control unit 15. The execution control unit 21 is connected to the memory MR. The execution control unit 21, the interrupt return control unit 23, the read control unit 31, and the write control unit 32 are connected to the decoding unit 19, and the selectors 26 and 28. The general register 13 and the shadow register 29 are connected to the selectors 26 and 28, and the decoding unit 19. The registers EPCR, EPSR, and PSR are connected to and located between the interrupt return control unit 23 and the interrupt control circuit 25. The judgment unit 30 is connected to the decoding unit 19. The input terminals of the AND circuit 27 are connected to the register PSR, the judgment unit 30, the execution control unit 21, the interrupt return control unit 23, the read control unit 31, and the write control unit 32. The output terminal of the AND circuit 27 is connected to the selectors 26 and 28. The interrupt control circuit 25 is connected to the program counter 9, the instruction control unit 15, the execution control unit 21, the interrupt return control unit 23, the read control unit 31, and the write control unit 32.

Based on the address of an instruction word to be read, which address is supplied from the program counter 9, the instruction control unit 15 reads out the instruction word from the memory MR and supplies it to the decoding unit 19. If an interrupt is detected during the instruction readout, the instruction control unit 15 supplies an interrupt signal to the interrupt control circuit 25 so as to notify the interrupt control circuit 25 of the detected interrupt. If a branch destination address is supplied during interrupt processing, the program counter 9 holds the branch destination address. If no such address is supplied, the program counter 9 is incremented so as to indicate the next instruction. Accordingly, based on the branch destination address supplied from the program counter 9, the instruction control unit 15 reads out the instruction word corresponding to the branch destination address from the memory MR in the interrupt processing.

The execution unit 33 executes an instruction supplied to the decoding unit 19. Examples of the instruction supplied to the decoding unit 19 include an arithmetic instruction, a branch instruction, a load instruction, a store instruction, an interrupt return instruction, a read instruction, and a write instruction. By executing the read instruction or the write instruction, all data stored in the general register 13 can be read out or written. By executing the other instructions, data processing is performed in an address area AGR allocated to the general register 13. More specifically, an arithmetic instruction is executed when an arithmetic operation is performed on the data in the address area AGR, a branch instruction is executed when the data in the address area AGR is selectively processed, a load instruction is executed when data is loaded into the address area AGR, and a store instruction is executed when data in the address area AGR is stored into a memory. Additionally, an interrupt return instruction is executed when the processor returns to the original state after the execution of an interrupt. The execution of each of those instructions will be described below in detail.

When an arithmetic operation is supplied to the decoding unit 19, the execution control unit 21 performs an arithmetic operation based on a value read out from the general register 13 via the selector 26, and writes the result of the arithmetic operation into the general register 13 via the selector 28. By supplying an effective signal of logic 1 to the AND circuit 27, the data (including the data stored in the shadow register 29) in the address area AGR application to the general register 13 is processed in the supervisor state. The effective signal has the address (the address "a2" shown in FIG. 5A) allocated to the shadow register 29 in the supervisor state, and becomes "0" only when the data stored in the general register 13 (the area A2 shown in FIG. 5A) is processed.

In a case where a branch is established when a branch instruction is supplied, the execution control unit 21 supplies a branch destination address to the program counter 9. When a load instruction is supplied, the execution control unit 21 determines an effective (memory) address based on a value read out from the general register 13 via the selector 26, and writes the data read out from the area in the memory MR corresponding to the determined effective address into the general register 13 via the selector 28. When a main instruction is executed, an effective signal of logic 1 is supplied to the AND circuit 27, so that the data (including the data stored in the shadow register 29) in the address area AGR allocated to the general register 13 is processed in the supervisor state.

When a store instruction is supplied, the execution control unit 21 determines the effective (memory) address based on a value read out from the general register 13 via the selector 26, and writes the data read out from the general register 13 into the area in the memory MR corresponding to the determined effective address via the selector 26. When a main instruction is executed, an effective signal of logic 1 is supplied to the AND circuit 27, so that the data (including the data stored in the shadow register 29) in the address area AGR allocated to the general register 13 is read out in the supervisor state.

When the interrupt return instruction is supplied, the interrupt return control unit 23 writes the value of the register EPSR into the register PSR, and then returns to the original state. The interrupt return control unit 23 also read outs the data stored in the register EPCR and supplies it as the branch destination address to the program counter 9.

When a read instruction is supplied, the read control unit 31 reads out the data stored in the area corresponding to the address (the address "a2" shown in FIG. 5A) allocated to the shadow register 29 for interrupt processing and in the general register 13 (the area A2 of FIG. 5) via the selector 26, and writes the changed data to the general register 13 via the selector 28. To read out the data from the general register 13, the read control unit 31 supplies an effective signal of logic 0 to the AND circuit 27. Accordingly, in the supervisor state, the read control unit 31 reads out the data (the data stored in the area A2 shown in FIG. 5A) corresponding to the address area (the address "a2" shown in FIG. 5A) allocated to the shadow register 29. To write data into the general register 13, the read control unit 31 supplies an effective signal of logic 1 to the AND circuit 27, thereby writing data into the address area AGR allocated to the general register 13.

When a write instruction is supplied, the write control unit 32 reads out data from the general register 13 via the selector 26, and writes, via the selector 28, the read data into the area (the area A2 shown in FIG. 5A) of the general register 13 that stores the data corresponding to the address (the address "a2" shown in FIG. 5A) allocated to the shadow register for interrupt processing. To read data from the general register 13 in the supervisor state, the write control unit 32 supplies an effective signal of logic 1 to the AND circuit 27. To write data into the area corresponding to the area A2 in the general register 13, the write control unit 32 supplies an effective signal of logic 0 to the AND circuit 27.

In a case where an interrupt is detected while an instruction is executed, the execution control unit 21, the interrupt return control unit 23, the read control unit 31, and the write control unit 32 each supply an interrupt signal to the interrupt control circuit 25.

The register EPCR is a register that holds an address indicating a return destination from an interrupt, and is set when an interrupt occurs. The register PSR is a register that holds a value indicating the state of the processor, and supplies a signal of logic 0 to the AND circuit 27 in the user state, and a signal of logic 1 to the AND circuit 27 in the supervisor state. The register EPSR is a register that holds a value indicating the state of the processor prior to interrupt occurrence, and is set when an interrupt occurs. The selectors 26 and 28 each select the shadow register 29 when a signal of logic 1 is supplied, and select the general register 13 when a signal of logic 0 is supplied.

In accordance with an interrupt signal supplied from the instruction fetch unit 1 or the execution unit 33, the interrupt control circuit 25 supplies an address indicating a return destination from an interrupt to the register EPCR, and supplies a value indicating the state of the processor prior to the interrupt occurrence to the register EPSR. The interrupt control circuit 25 then writes a value indicating the state of the processor at the time of the interrupt occurrence into the register PSR. After these operations, the processor switches to the supervisor state. The interrupt control circuit also supplies a branch destination address corresponding to the interrupt to the instruction fetch unit 1.

As described above, the instruction control unit 15 in the instruction fetch unit 1 reads out an instruction from the memory MR in accordance with a supplied branch destination address, and supplies the read instruction to the execution unit 33. The execution unit 33 executes the supplied instruction, and then branches the control flow into another process (interrupt processing) that does not comply with the instruction execution order prescribed as a program. The execution unit 33 thus executes an interrupt processing program (also known as an interrupt handler). After the execution of the interrupt processing program, the execution unit 33 returns to the execution of the original program in accordance with an interrupt return procedure specified at the end of the interrupt processing program.

The above processor may be in the user state in which normal data processing is performed by activating software on the OS, and in the supervisor state in which the OS itself can be operated. When an interrupt occurs, the processor switches from the user state to the supervisor state. At the time of the return from the interrupt, the processor switches back to the user state.

In the supervisor state, as long as an effective signal of logic 1 is supplied from the AND circuit 27 to the selectors 26 and 28, data read and write operations can be performed on the shadow register 29 in the address area AGR shown in FIG. 5A. If an effective signal of logic 0 is supplied from the AND circuit 27 to the selectors 26 and 28 either in the user state or in the supervisor state, data read and write operations can be performed only on the general register 13.

The judgment unit 30 determines whether or not an address supplied from the decoding unit 19 is included in the address area (the address corresponding to the area A2 shown in FIG. 5A), which is available for interrupt processing. If the supplied address is included in the address area, the judgment unit 30 supplies a signal of logic 1 to the AND circuit 27. Here, the address area to be judged is determined by the structure of the decoder included in the judgment unit 30, but it is also possible to include a register in the judgment unit 30 so as to make the address area rewritable. Also, the entire address area corresponding to the general register 13 at the time of interrupt processing can be allocated to the address area of the shadow register 29. In this manner of address area allocation, a larger workable address area can be ensured, thereby achieving more effective interrupt processing. In such a case, when reading or writing data, the selectors 26 and 28 only select either the general register 13 or the shadow register 29 to fulfill the purpose, so that the judgment unit 30 can be omitted. This also applies to the other embodiments of the processor in accordance with the present invention.

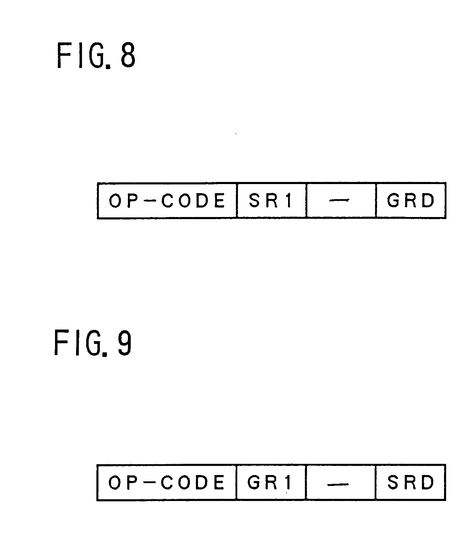

FIG. 8 shows the format of the read instruction. As shown in FIG. 8, the read instruction comprises an instruction code OP-CODE that varies with each instruction, an operand SR1 that specifies, as an object to be read, the register number of the area (the area A2 shown in FIG. 5A) of the general register 13 storing the data corresponding to the address (the address "a2" shown in FIG. 5A) allocated to the shadow register 29 for interrupt processing, and an operant GRD that specifies the register number of the general register 13 as a changed data write destination.

FIG. 9 shows the format of the write instruction. As shown in FIG. 9, the write instruction comprises an instruction code OP-CODE that varies with each instruction, an operand GR1 that designates the register number of the general register 13 holding a write value, and an operand SRD that specifies, as an object to be written, the register number of the area (the area A2 shown in FIG. 5A) of the general register 13 storing the data corresponding to the address (the address "a2" shown in FIG. 5A) allocated to the shadow register 29 for interrupt processing.

The structure of the interrupt processing program and its execution order in accordance with this embodiment are the same as those shown in FIG. 3.

As described so far, in the processor of the first embodiment of the present invention, the entire area or a part of the address area corresponding to the general register 13 in the supervisor state is allocated to the shadow register 29, so as to eliminate the need to perform the load store operation on the memory MR for data saving. Thus, interrupt processing can be performed at a higher speed than in the prior art.

### [Second Embodiment]

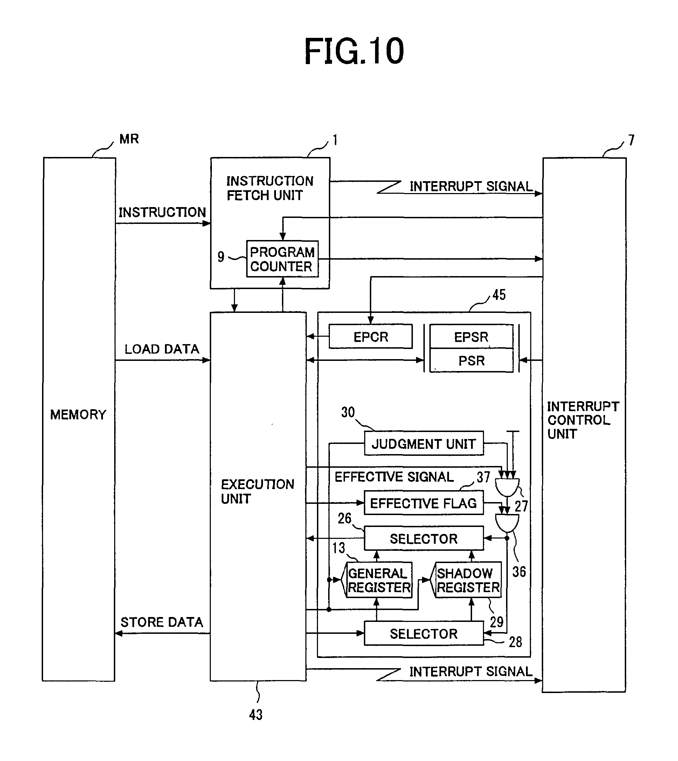

FIG. 10 shows the structure of a second embodiment of the processor in accordance with the present invention. As shown in FIG. 10, this processor has fundamentally the same structure as the first embodiment, comprising the instruction fetch unit 1, an execution unit 43, a register control unit 45, the interrupt control unit 7, and the memory MR. However, unlike the register control unit 35 shown in FIG. 6, the register control unit 45 further comprises an AND circuit 36 and an effective flag 37.

The effective flag 37 indicates whether an operation that selects the shadow register 29 is valid or not. If the effective flag 37 is 0, the operation that selects the shadow register 29 is invalid. If the effective flag 37 is 1, the operation that selects the shadow register 29 is valid. Accordingly, an effective flag write instruction described below is used to instruct explicitly whether or not the shadow register 29 is to be read or written during interrupt processing. The effective flag write instruction is executed to write the value "0" in the effective flag 37, so that the data stored in the area (the area A2 shown in FIG. 5A) in the general register 13 storing the data corresponding to the address (the address "a2" shown in FIG. 5A) allocated to the shadow register 29 can be explicitly processed at the time of execution of a read instruction or a write instruction.

The input terminals of the AND circuit 36 are connected to the effective flag 37 and the output terminal of the AND circuit 27, while the output terminal of the AND circuit 36 is connected to the selectors 26 and 28.

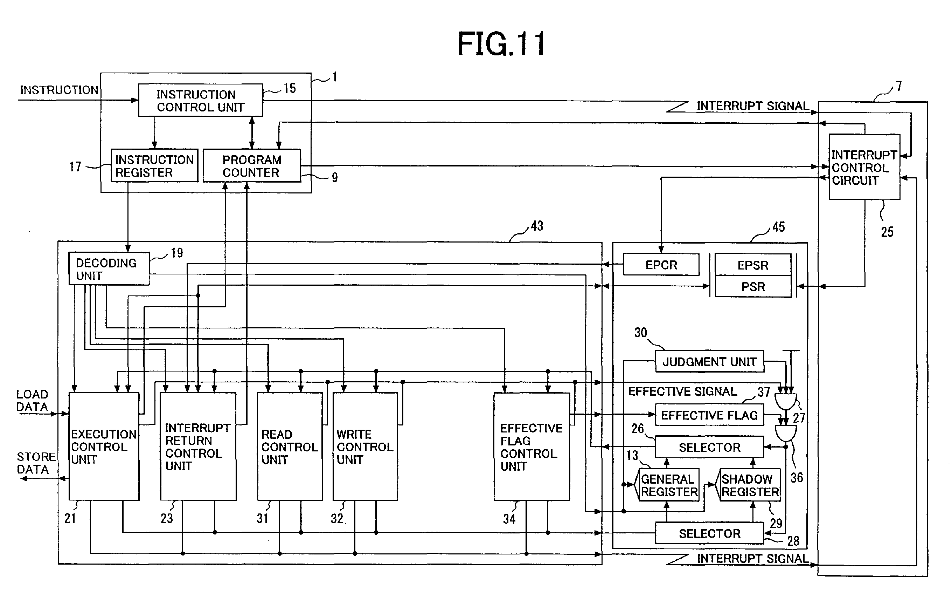

FIG. 11 is a detailed block diagram of the structure of the processor shown in FIG. 10. The structure of the processor shown in FIG. 11 is substantially the same as the structure of the processor shown in FIG. 7, except that the execution unit 43 further comprises an effective flag control unit 34. This effective flag control unit 34 is connected to the decoding unit 19, the AND circuit 27, the effective flag 37, and the selectors 26 and 28.

The processor of this embodiment operates substantially in the same manner as the processor of the first embodiment, but the effective flag control unit 34 supplies the write value "0" or "1" stored in the general register 13 to the effective flag 37 in accordance with a supplied effective flag write instruction. Here, if the value "0" is written in the effective flag 37, the value "0" is supplied to the AND circuit 36, which output will be "0" accordingly. In other words, if the value "0" is written in the effective flag 37, read or write operations can be performed only on the general register 13, regardless of whether the processor is in the user state or in the supervisor state.

If the value "1" is written in the effective flag 37, the value "1" is supplied from the effective flag 37 to the AND circuit 36. Accordingly, the output of the AND circuit 36 is "1". To sum up, with the processor of this embodiment, read or write operations can be performed on the shadow register 29 in the address area AGR shown in FIG. 5A, only when the effective signal supplied from the effective flag control unit 34 to the AND circuit 27 is "1" in the supervisor state.

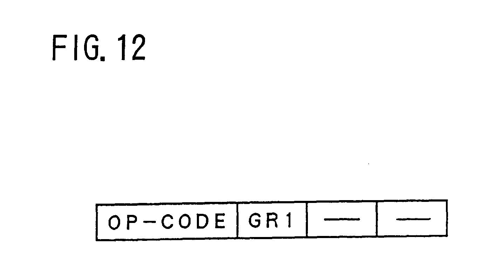

FIG. 12 shows the format of the effective flag write instruction. As shown in FIG. 12, the effective flag write instruction comprises an instruction code OP-CODE that varies with each instruction, and an operand GR1 that specifies the register number of the general register 13 holding the write value. In FIG. 12, the fields following the operand GR1 have no instructions written therein.

The structure of the interrupt processing program of the second embodiment and its execution order are the same as those shown in FIG. 3.

As described so far, with the processor of the second embodiment, the same effects as with the first embodiment can be achieved. Also, whether or not the entire area or a part of the address area corresponding to the general register 13 is to be allocated to the shadow register 29 in the supervisor state can be determined by supplying the effective flag write instruction from the outside. Thus, the operation reliability can be increased.

In the processor of the second embodiment of the present invention, the entire area or a part of the address area AGR corresponding to the general register 13 can be allocated as the address area ASR for the shadow register 29 during interrupt processing, as in the foregoing embodiment.

### [Third Embodiment]

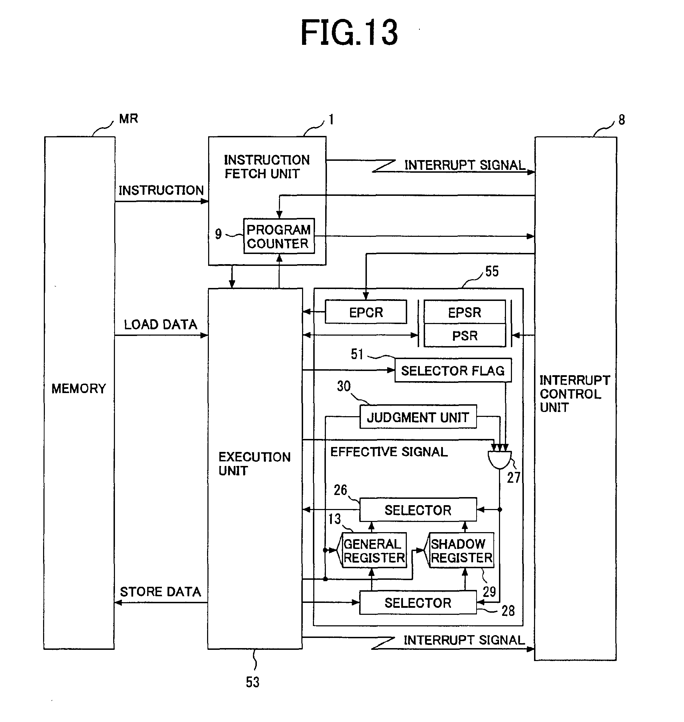

FIG. 13 shows the structure of a third embodiment of the processor in accordance with the present invention. As shown in FIG. 13, this processor has substantially the same structure as the processor of the first embodiment shown in FIG. 6, comprising the instruction fetch unit 1, an execution unit 53, a register control unit 55, an interrupt control unit 8, and the memory MR. However, unlike the register control unit 35 shown in FIG. 6, the register control unit 55 further comprises a selector flag 51. This selector flag 51 indicates whether or not read or write operations can be performed on the shadow register 29. If the selector flag 51 is "0", neither read nor write operations are performed on the shadow register 29. If the selector flag 51 is "1", read and write operations can be performed on the shadow register 29.

Also, unlike the AND circuit 27 included in the register control unit 35 shown in FIG. 6, the input terminal of the AND circuit 27 included in the register control unit 55 is connected to the selector flag 51 instead of the register PSR.

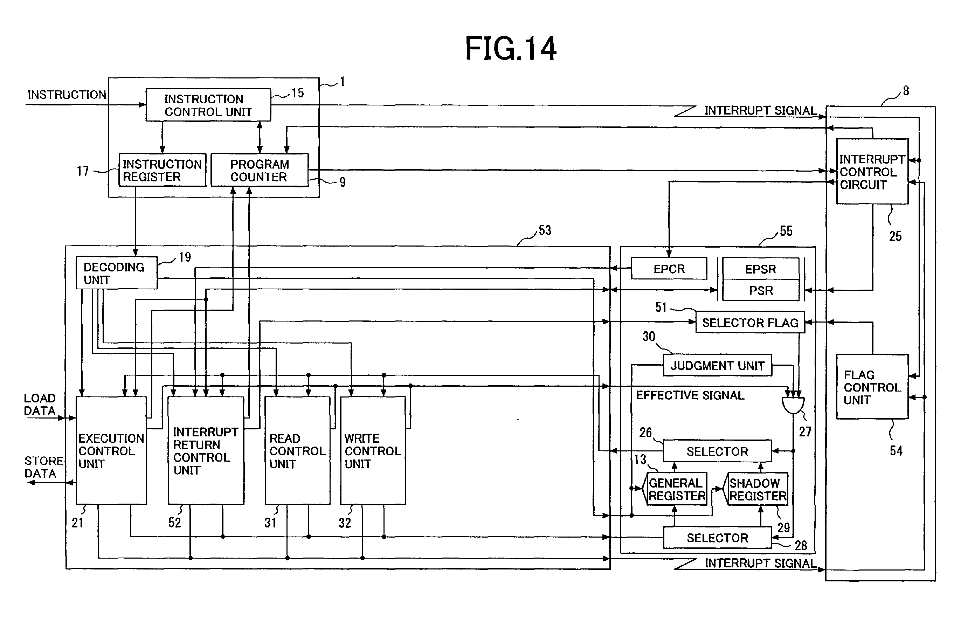

FIG. 14 is a detailed block diagram of the structure of the processor shown in FIG. 13. The structure of this processor is substantially the same as the structure of the processor shown in FIG. 7, except that the register control unit 55 further comprises the selector flag 51 and the interrupt control unit 8 further comprises a flag control unit 54. The selector flag 51 is connected to and located between an interrupt return control unit 52 and the flag control unit 54. The flag control unit 54 is connected to the selector flag 51, the instruction control unit 15, the interrupt control circuit 25, the execution control unit 21, the interrupt return control unit 52, the read control unit 31, and the write control unit 32.

The processor of this embodiment operates substantially in the same manner as the processor of the first embodiment. However, the flag control unit 54 supplies the value "1" to the selector flag 51 in accordance with an interrupt signal supplied when an interrupt occurs. As the value "1" is written in the selector flag 51, the value "1" is then supplied to the AND circuit 27. Accordingly, the output signal of the AND circuit 27 is at logic 1 only when an effective signal of logic 1 is supplied to the AND circuit 27, and read and write operations can be performed on the shadow register 29 in the address area AGR shown in FIG. 5A.

Meanwhile, if an interrupt return instruction is executed, the value "0" is supplied from the interrupt return control unit 52 to the selector flag 51, thereby switching the processor to the previous state. If the value "0" is written in the selector flag 51 at this point, the value "0" is supplied to the AND circuit 27. Since the signal of logic 0 is constantly outputted from the AND circuit 27 in this case, read and write operations can be performed only on the general register 13, regardless of the logic level of the effective signal.

The structure of the interrupt processing program of the third embodiment and its execution order are the same as those shown in FIG. 3.

As described so far, with the processor of the third embodiment of the present invention, the same effects as can be achieved with the processor of the first embodiment can be achieved.
Furthermore, the value to be written in the selector flag 51 is controlled as described above, so that data processing can be effectively performed even in a program having a so-called nest structure in which multiple interrupts occur in the supervisor state.

In the processor of the third embodiment, the selector flag 51 may be rewritten by externally supplying a selector flag write instruction. Here, the selector flag write instruction is used to determine whether or not an address is to be allocated to the shadow register 29 shown in FIG. 5, i.e., whether or not the shadow register 29 is to be used in data processing performed on the general register 13.

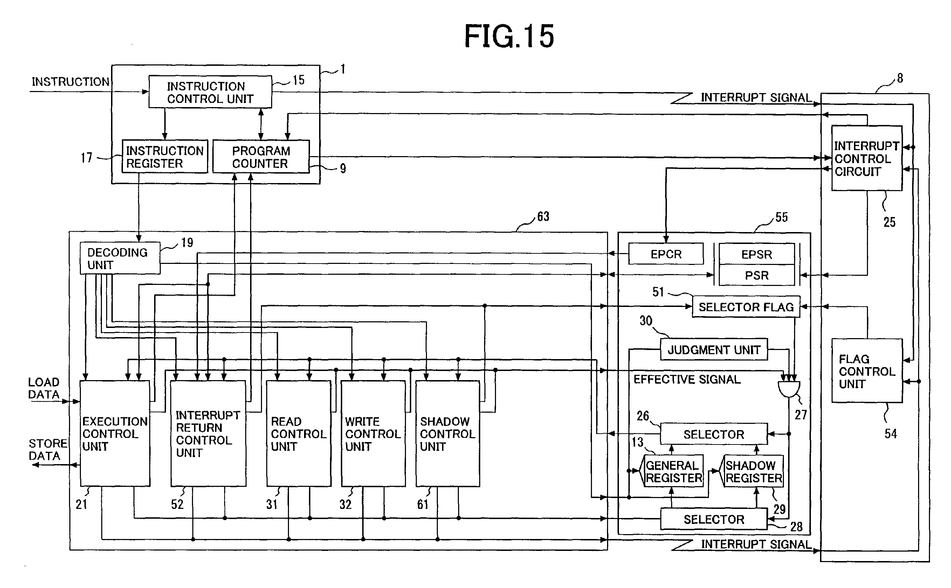

FIG. 15 shows the structure of the processor that can satisfy the above functions. As shown in FIG. 15, this processor has substantially the same structure as the processor shown in FIG. 14, except that an execution unit 63 further comprises a shadow control unit 61. The shadow control unit 61 is connected to the decoding unit 19, the AND circuit 27, the selectors 26 and 28, the selector flag 51, the flag control unit 54, and the interrupt control circuit 25.

The shadow control unit 61 supplies the write value "0" or "1" stored in the general register 13 to the selector flag 51 in accordance with a supplied selector flag write instruction. If the value "0" is write in the selector flag 51, the AND circuit 27 also receives the value "0", and the output of the AND circuit 27 is also "0". Accordingly, when the value "0" is written in the selector flag 51, read and write operations can be performed only on the general register 13, regardless of whether the processor is in the user state or in the supervisor state.

On the other hand, if the value "1" is written in the selector flag 51, the AND circuit 27 receives the value "1" from the selector flag 51. Accordingly, read and write operations can be performed on the shadow register 29 in the address area AGR shown in FIG. 5, only when the value "1" is written in the selector flag 15 and the effective signal supplied to the AND circuit 27 is "1".

The format of the selector flag write instruction is the same as the format shown in FIG. 12. More specifically, the selector flag write instruction comprises an operation code OP-CODE that varies with each instruction, and an operand GR1 that specifies the register number of the general register 13 holding the write value.

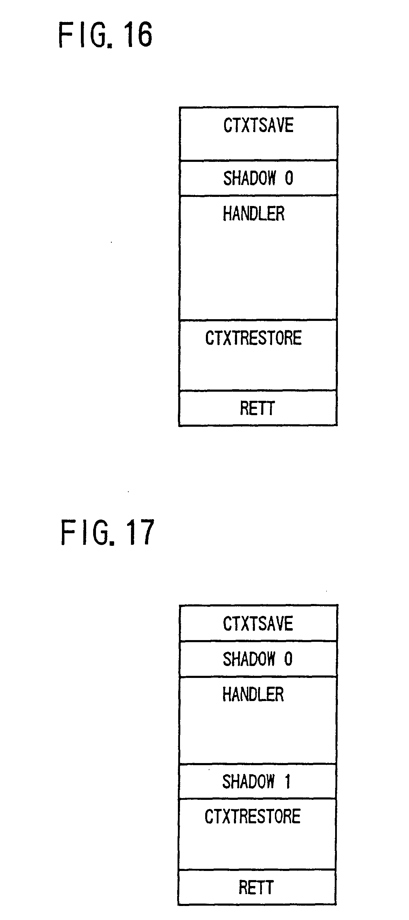

FIG. 16 shows the structure of an interrupt processing program to be executed by the processor comprising the shadow control unit 61. As shown in FIG. 16, this interrupt processing program comprises a saving part CTXTSAVE for saving a context in the original order specified as the program for executing an instruction into a memory, a shadow reset part SHADOW0 for writing the value "0" in the selector flag 51 by the selector flag write instruction, a handling part HANDLER for performing an operation corresponding to an interrupt that has occurred, a restoring part CTXTRESTORE for restoring the context in the original order specified as the program for instruction execution, and a return part RETT for returning from the interrupt in compliance with an interrupt return instruction. The saving part CTXTSAVE, the shadow reset part SHADOW0, the handling part HANDLER, the restoring part CTXTRESTORE, and the return part RETT are executed in that order.

The above interrupt processing program may further comprise a shadow set part SHADOW1, between the handling part HANDLER and the restoring part CTXTRESTORE, for writing the value "1" in the selector flag 51 by the selector flag write instruction, as shown in FIG. 17. In this case, the saving part CTXTSAVE, the shadow reset part SHADOW0, the handling part HANDLER, the shadow set part SHADOW1, the restoring unit CTXTRESTORE, and the return part RETT are executed in that order.

In the processor of the third embodiment, the entire part or a part of the address area AGR corresponding to the general register 13 during interrupt processing can be allocated as the address area ASR of the shadow register 29, as in the foregoing embodiments.

### [Fourth Embodiment]

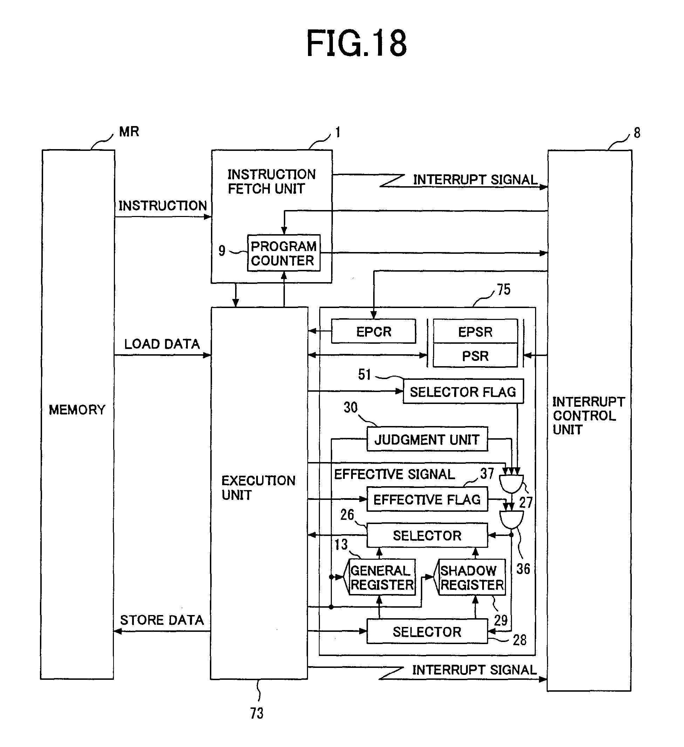

FIG. 18 shows the structure of a fourth embodiment of the processor in accordance with the present invention. As shown in FIG. 18, this processor has substantially the same structure as the processor of the third embodiment shown in FIG. 13, comprising the instruction fetch unit 1, an execution unit 73, a register control unit 75, the interrupt control unit 8, and the memory MR. However, unlike the register control unit 55 shown in FIG. 13, the register control unit 75 further comprises the AND circuit 36 and the effective flag 37. The effective flag 37 indicates whether or not an operation that selects the shadow register 29 is valid. If the effective flag 37 is "0", the operation that selects the shadow register 29 is invalid. If the effective flag 37 is "1", the operation that selects the shadow register 29 is valid.

The input terminals of the AND circuit 36 are connected to the effective flag 37 and the output terminal of the AND circuit 27, while the output terminal of the AND circuit 36 is connected to the selectors 26 and 28.

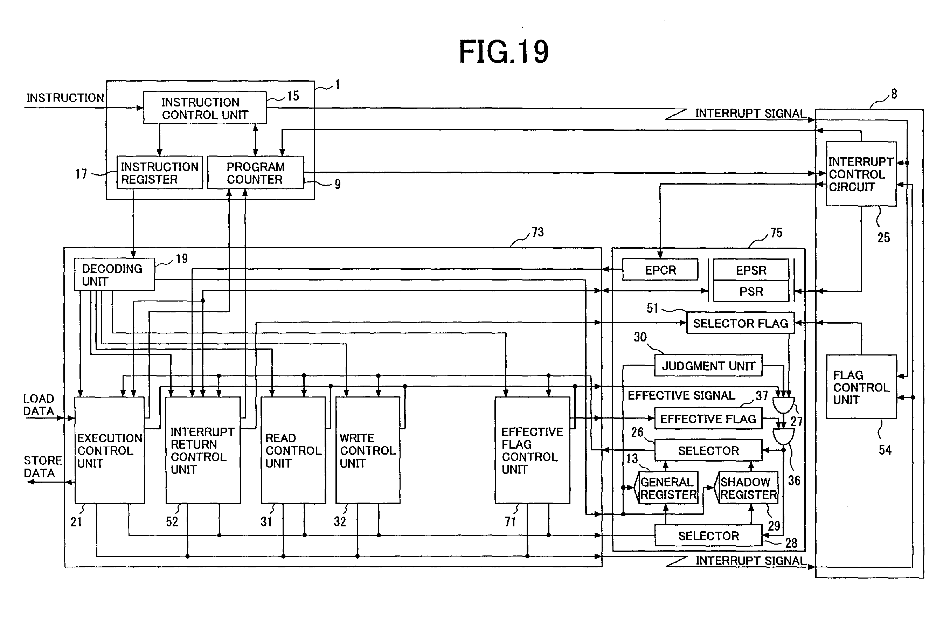

FIG. 19 is a detailed block diagram of the structure of the processor shown in FIG. 18. The structure of this processor shown in FIG. 19 is substantially the same as the processor shown in FIG. 14, except that the execution unit 73 further comprises an effective flag control unit 71 connected to the effective flag 37. This effective flag control unit 71 is connected to the decoding unit 19, the AND circuit 27, the effective flag 37, the selectors 26 and 28, the flag control unit 54, and the interrupt control circuit 25.

The processor of the fourth embodiment operates substantially in the same manner as the processors of the second and third embodiments. The effective flag control unit 71 supplies the write value of "0" or "1" stored in the general register 13 to the effective flag 37, in accordance with a supplied effective flag write instruction. If the value "0" is written in the effective flag 37, the value "0" is then supplied to the AND circuit 36, thereby making the output of the AND circuit 36 "0". Accordingly, when the value "0" is written in the effective flag 37, read and write operations can be performed only on the general register 13, regardless of whether the processor is in the user state or in the supervisor state.

If the value "1" is written in the effective flag 37, the value "1" is then supplied from the effective flag 37 to the AND circuit 36. Accordingly, when a signal of logic 1 is outputted from the AND circuit 27, the output of the AND circuit 36 is "1". In the processor of this embodiment, read and write operations can be performed on the shadow register 29 in the address area AGR shown in FIG. 5A, only when the values of the selector flag 51 and the effective flag 37 are both "1", and the effective signal supplied to the AND circuit 27 is "1".

The format of the effective flag write instruction of this embodiment is the same as the format shown in FIG. 12. More specifically, the effective flag write instruction comprises an instruction code OP-CODE that varies with each instruction, and an operand GR1 for specifying the register number of the general register 13 holding the write value.

The structure of the interrupt processing program of the fourth embodiment and its execution order are the same as those shown in FIG. 3.

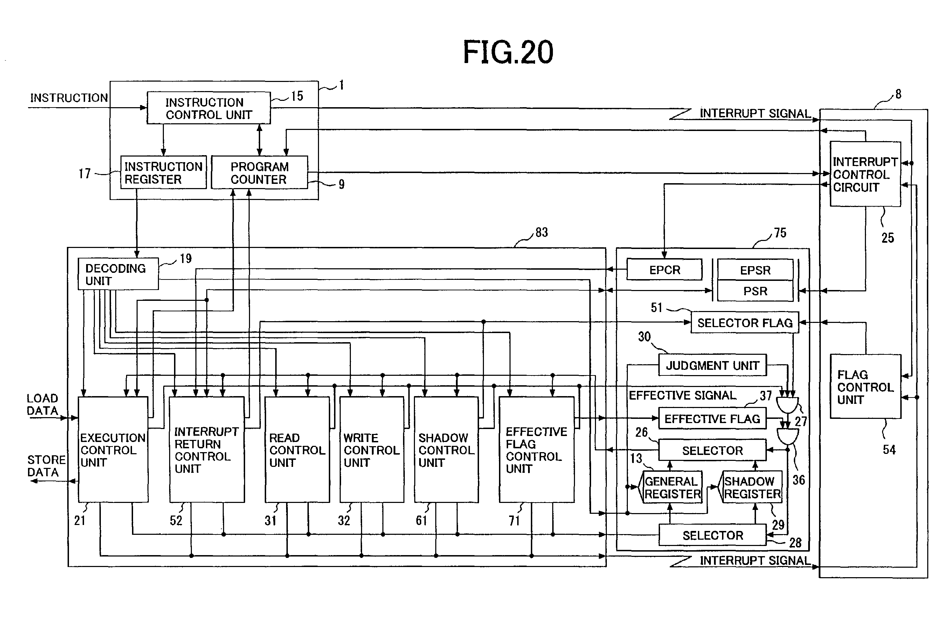

In the processor of the fourth embodiment, an instruction supplied from the outside may be executed so that the selector flag 51 can be rewritten. FIG. 20 shows the structure of a processor that can satisfy such a function. As shown in FIG. 20, this processor has substantially the same structure as the processor shown in FIG. 19, except that an execution unit 83 further comprises the shadow control unit 61. The shadow control unit 61 is connected to the decoding unit 19, the AND circuit 27, the selectors 26 and 28, the selector flag 51, the flag control unit 54, and the interrupt control circuit 25.

The shadow control unit 61 supplies the value "0" or "1" stored in the general register 13 to the selector flag 51, in accordance with a supplied selector flag write instruction. If the value "0" is written in the selector flag 51, the value "0" is also supplied to the AND circuit 27, thereby making the output of the AND circuit 27 "0". Accordingly, when the value "0" is written in the selector flag 51, read and write operations can be performed only on the general register 13, regardless of whether the processor is in the user state or in the supervisor state.

On the other hand, if the value "1" is written in the selector flag 51, the value "1" is supplied from the selector flag 51 to the AND circuit 27. Accordingly, in the processor of this embodiment, read and write operations can be performed on the shadow register 29 in the address area AGR shown in FIG. 5A, only when the value "1" is written in the selector flag 51 and the effective signal supplied to the AND circuit 27 is "1".

The format of the selector flag write instruction of this embodiment is the same as the format shown in FIG. 16. More specifically, the selector flag write instruction comprises an instruction code OP-CODE that varies with each instruction, and an operand GR1 that specifies the register number of the general register 13 holding the write value.

In the processor of this embodiment, the interrupt processing programs shown in FIGS. 16 and 17, respectively, can be executed.

As described so far, with the processor of the fourth embodiment, the same effects as can be achieved with the processor of the third embodiment can be achieved. Furthermore, whether or not the address area AGR corresponding to the general register 13 in interrupt processing should be allocated to the shadow register 29 is determined in accordance with the set value of the effective flag 37. Thus, the operation reliability can be dramatically increased.

Additionally, in the processor of the fourth embodiment, the entire part or a part of the address area AGR corresponding to the general register 13 during interrupt processing may be allocated as the address area ASR to the shadow register 29, as in the foregoing embodiments.

The present invention is not limited to the specifically disclosed embodiments, but variations and modifications may be made without departing from the scope of the present invention.

The present application is based on Japanese priority application No. 11-315423, filed on November 5, 1999, the entire contents of which are hereby incorporated by reference.

## Claims

1. A data processing apparatus, characterized by comprising:
an execution unit that executes an instruction read out from a memory;
a general register that is connected to the execution unit;
a storage unit that is connected to the execution unit; and
an address switching unit that allocates to the storage unit a part or the entire part of an address already allocated to the general register, when an interrupt is executed in accordance with the instruction read out from the memory.

2. The data processing apparatus as claimed in claim 1, characterized by further comprising a status value set unit in which a value that varies depending on whether or not the interrupt is being executed in accordance with the instruction is set,
wherein the address switching unit allocates to the storage unit a part or the entire part of the address already allocated to the general register, in accordance with the value set in the status value set unit.

3. The data processing apparatus as claimed in claim 1, characterized by further comprising a data saving unit that saves data stored in the general register into the memory at the time of executing the interrupt, in accordance with a save destination address stored in the storage unit.

4. The data processing apparatus as claimed in claim 1, characterized by further comprising a data read and write unit that performs data read and write operations on the general register, in accordance with the address.

5. The data processing apparatus as claimed in claim 1, characterized by further comprising an effectiveness set unit that sets a value depending on whether or not an operation of allocating the address to the storage unit is valid,
wherein the address switching unit is activated depending on the value set by the effectiveness set value.

6. The data processing apparatus as claimed in claim 2, characterized in that the status value set unit is set at a value depending on a supplied instruction.

7. A method of controlling a data processing apparatus that comprises an execution unit, and a general register and a storage unit both connected to the execution unit, said method characterized by comprising the steps of:
executing an instruction read out from a memory by the execution unit; and
allocating to the storage unit a part or the entire part of an address allocated to the general register, when an interrupt is executed in accordance with the instruction read out from the memory.

8. The method as claimed in claim 7, characterized by further comprising the step of saving data stored in the general register into the memory at the time of executing the interrupt, in accordance with a save destination address stored in the storage unit.

9. The method as claimed in claim 7, characterized by further comprising the step of switching the data processing apparatus between a user mode and a supervisor mode at the time of executing the interrupt.
